Europäisches Patentamt

European Patent Office

Office européen des brevets

(11) Numéro de publication: **0 485 677 A1**

# DEMANDE DE BREVET EUROPEEN

(21) Numéro de dépôt: **90440101.5**

(22) Date de dépôt: **15.11.90**

(51) Int. Cl.5: **B29C 33/38**

Revendications modifiées conformément à la règle 86 (2) CBE.

(43) Date de publication de la demande:
**20.05.92 Bulletin 92/21**

(84) Etats contractants désignés:
**AT BE CH DE DK ES FR GB GR IT LI LU NL SE**

(71) Demandeur: **PERMIS DE CONSTRUIRE SA**
**102 Avenue de Grasse, Les Hauts Malvans**
**F-06800 Cagnes sur mer(FR)**

(72) Inventeur: **Gault, Dominique**
**1 Allée des Bastides, Les Hauts de**
**Vaugrenier**
**F-06270 Villeneuve Loubet(FR)**

(54) **Procédé pour la réalisation de moules.**

(57) Procédé pour la réalisation de moules (9) en caoutchouc de silicone, notamment des moules comportant des détails en relief à très haute définition, en vue d'obtenir, par moulage, des pièces (10) en plâtre, résines naturelles ou synthétiques, cire, béton et analogues, comportant lesdits détails en reliefs, et notamment, mais non exclusivement des maisons, monuments, et autres ouvrages d'architecture miniature, caractérisé en ce qu'il consiste, dans une première étape, à réaliser un dessin (1) à très grande échelle du motif à obtenir, puis dans une seconde étape, à réaliser par réduction photographique un cliché à l'échelle 1 en positif du même motif, puis dans une troisième étape à graver ce motif en positif sur une plaque de matériau polymère photosensible, en soumettant cette plaque revêtue de ce cliché à un rayonnement riche en UV puis en éliminant le polymère biodégradé par lavage à l'eau chaude, et enfin à transférer ce motif en négatif par moulage d'un caoutchouc silicone sur ladite plaque gravée.

EP 0 485 677 A1

Rank Xerox (UK) Business Services
(-/2.19/2.0)

La présente invention concerne la réalisation de produits tels que notamment mais non exclusivement des modèles en réduction de maisons et autres ouvrages d'architecture, soit en trois dimensions, soit sous une forme semblable à des bas-reliefs, comportant dans tous les cas des détails en relief ou en creux à très haute définition quelle que soit l'échelle adoptée.

Actuellement les modèles de cette qualité sont exécutés par sculpture à la main d'ébauches en plâtre ou en céramique, ce qui représente un travail très minutieux, extrêmement long et nécessairement limité à un nombre d'exemplaires relativement restreint, vendus à prix élevé

L'invention consiste à réaliser une surface en relief ou en creux, soit sur la face correspondante de l'ébauche, soit sur une plaque mince venant se coller sur cette face, par un procédé de moulage aisément répétitif, et faisant appel à un moule en négatif à très haute définition obtenu lui-même à partir d'une matrice en positif réalisée par insolation d'une plaque en matériau polymère photosensible recouverte d'un dessin extrêmement précis correspondant aux creux et reliefs à produire.

L'invention vise donc en premier lieu, un procédé permettant la réalisation de moules en caoutchouc de silicone, notamment comportant des détails à haute définition, en vue du moulage de pièces en plâtre, résines naturelles et synthétiques, béton et analogues, caractérisé en ce qu'il consiste, à partir d'un dessin à grande échelle du motif à obtenir, à réaliser, par réduction photographique de ce dessin, une épreuve en positif, à partir de laquelle on réalise une matrice photopolymère positive en relief, dont le motif est transféré en négatif par moulage sur le moule de caoutchouc silicone.

Dans la pratique, le point de départ de ce procédé est la réalisation d'un dessin très précis à l'échelle 3/1-5/1 de la pièce finale à obtenir, en conservant en blanc les zones en relief et en noircissant les parties en creux.

A partir de ce dessin, on réalise un négatif mat par réduction photographique, en considérant que la qualité du produit final sera directement liée à celle de ce négatif. Ainsi ce dernier devra présenter les caractéristiques suivantes :

- Forte densité des noirs (minimum 4 ou 5). Il est possible de contrôler cette densité à l'aide d'une ampoule électrique claire. Pour cela, placer le négatif devant un oeil et regarder au travers du noir de l'ampoule électrique. On ne doit rien voir. Si on aperçoit le filament, c'est que le film n'est pas assez dense.
- Les blancs doivent être parfaitement clairs, les contours nets et ne pas présenter de points noirs ou un voile grisâtre.

- Le négatif sera sens typo, c'est à dire que l'on pourra lire à l'endroit du côté couche. Les éventuels points blancs pouvant apparaître dans les noirs du négatif seront corrigés à l'aide de gouache brune, la correction se faisant sur le côté opposé à la couche du film.

Ces différents points doivent être scrupuleusement respectés. Il s ont la clé de la réussite d'un bon cliché et plus principalement si l'on désire reproduire des finesses.

Le négatif étant réalisé et répondant aux critères ci-dessus définis on doit alors réaliser le cliché. La première opération, celle qui va transmettre l'image sur le polymère est l'insolation. Pour ce faire, quelques précautions sont nécessaires.

- La plaque photopolymère devra être légèrement plus grande que le négatif afin que ce dernier ne déborde d'aucun côté.
- La face mate (le côté couche) du négatif sera placée sur le polymère d'où l'on aura préalablement enlevé le film protecteur. On procède alors au vide du chassis afin de parfaitement plaquer le négatif sur le polymère, en chassant les éventuelles bulles d'air qui pourraient se trouver enfermées.
- Le vide obtenu, il faut procéder à l'insolation par une lumière riche en UV, et dont le temps est variable en fonction du type de la plaque photopolymère, de son épaisseur et de la qualité de l'image à reproduire (traits fins, gros caractères, à plat, trame etc...). Le temps moyen d'exposition pour une plaque du type LSL 94 ou LPS 95 commercialisée en France par la firme GROGNARD par exemple, est de trois minutes. Sur d'autres matériels, il convient de procéder à un essai pour déterminer ce temps de base.

Evidemment le vide sera maintenu durant tout le temps de l'exposition.

La plaque insolée, il va falloir la graver pour éliminer toutes les parties non durcies et lui donner son relief.

La "gravure" se fait par dissolution des parties insolées au moyen d'eau à une température de 20 à 30°C selon le type de plaque, pendant une durée de 30 secondes à 3 minutes, suivie d'un séchage au four à air pulsé à 60-90° C pendant 10 à 15 minutes.

Après ce séchage, il convient généralement de procéder à une postexposition en vue de durcir l'ensemble de la plaque.

La plaque ainsi obtenue possède en positif les reliefs à obtenir sur le produit final. On obtient le moule en caoutchouc de silicone en installant cette plaque dans le fond d'une boîte dans laquelle on coule le caoutchouc, ce qui donne un moule en négatif à partir duquel le produit fini sera moulé.

Comme indiqué dans le préambule de la présente description, ce produit pourra prendre plusieurs formes.

Ainsi, on pourra réaliser directement un modèle de maison, auquel cas, on moule le plâtre, la cire, la résine ou tout autre matériau choisi, dans un moule dont les faces intérieures sont chacune constituées par une plaque de caoutchouc silicone portant en négatif les reliefs de la face correspondante du modèle à obtenir de l'ordre de 0,2 - 0,7 mm. Dans le cas d'inscriptions, ces reliefs peuvent atteindre 1,5mm.

On pourra également réaliser de manière semblable des plaques minces individuelles par exemple la façade d'un monument en collant une plaque mince portant les reliefs de cette façade sur un support plan. Pour obtenir des reliefs plus accentués, ou créer des effets de perspective sur les plan diversement éloignés, on pourra superposer par collage, sur un support plan, de plusieurs plans de profils et de reliefs différents, par exemple pour réaliser un paysage accidenté.

Au lieu d'un support plan, on peut également prévoir des supports tridimensionnels, de formes et dimensions diverses sur lesquels on vient coller les plaques en reliefs, au moment même de leur moulage.

Selon une variante de l'invention, on peut utiliser la plaque photopolymère comme élément de moulage direct. Dans ce cas on économisera la fabrication d'un moule en silicone. Cette technique s'adresse toutefois à la réalisation de pièces uniques puisque la plaque photopolymère ne sert qu'une fois.

Le procédé selon l'invention est donc d'une très grande souplesse de mise en oeuvre. Il permet d'obtenir des détails en relief extrêmement fins et précis sans autre habileté que celle du dessinateur initial, lequel travaille à grande échelle, ce qui facilite son travail.

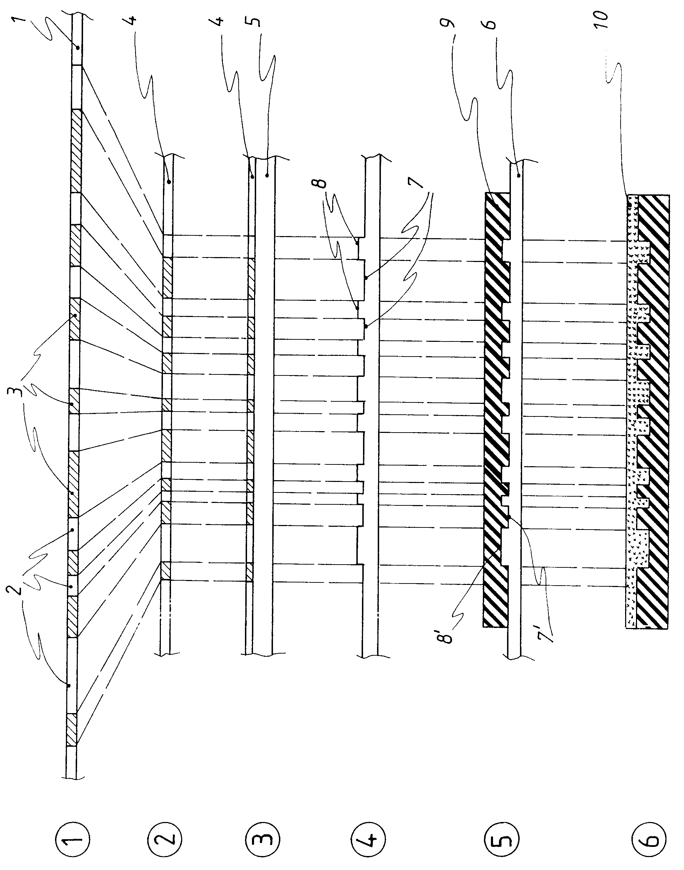

## Revendications

1.  Procédé pour la réalisation de moules en caoutchouc de silicone, notamment des moules comportant des détails en relief à très haute définition, en vue d'obtenir, par moulage, des pièces en plâtre, résines naturelles ou synthétiques, cire, béton et analogues, comportant lesdits détails en reliefs, et notamment, mais non exclusivement des maisons, monuments, et autres ouvrages d'architecture miniature, caractérisé en ce qu'il consiste, dans une première étape, à réaliser un dessin à très grande échelle du motif à obtenir, puis dans une seconde étape, à réaliser par réduction photographique un cliché à l'échelle 1 en positif du même motif, puis dans une troisième étape à graver ce motif en positif sur une plaque de matériau polymère photosensible, en soumettant cette plaque revêtue de ce cliché à un rayonnement riche en UV puis en éliminant le polymère biodégradé par lavage à l'eau chaude, et enfin à transférer ce motif en négatif par moulage d'un caoutchouc silicone sur ladite plaque gravée.

2.  Procédé de réalisation de pièces en plâtre, résines naturelles ou synthétiques et analogues, notamment des réductions de maisons et autres ouvrage d'architecture, caractérisé en ce que, en vue de l'obtention de détails en relief très fins, on réalise ces pièces par moulage au moyen de moules en caoutchouc de silicone obtenus par le procédé selon 1.

3.  Produits moulés en plâtre, résines naturelles ou synthétiques et analogues, et notamment maisons, monuments, et autres ouvrages d'architecture en miniature, comportant des détails en relief à très haute définition, caractérisé en ce qu'ils sont obtenus par la mise en oeuvre du procédé selon la revendication 2 au moyen des moules crées par le procédé de la revendication 1.

**Revendications modifiées conformément à la règle 86(2) CBE.**

1.  Procédé pour la fabrication de plaques décoratives moulées en trois dimensions à partir d'un motif graphique plan, du type consistant à réaliser une copie photographique sur support transparent, à superposer cette copie avec une plaque de matériau photo-sensible, à irradier l'ensemble superposé de manière à créer des portions dudit matériau photosensible ayant des propriétés de résistance physique distinctes selon qu'elles auront ou non subi l'irradiation et correspondant aux zones respectivement blanches ou noires de ladite copie, à traiter ledit matériau par un agent éliminant les portions non résistantes en créant ainsi une plaque intermédiaire présentant des creux et des reliefs correspondant respectivement aux zones noires et aux zones blanches du motif blanc de départ, à mouler un matériau souple tel qu'un caoutchouc de silicone dans cette plaque intermédiaire de manière à obtenir une matrice en négatif dans laquelle seront moulées en positif lesdites plaques décoratives,
    caractérisé en ce que
    -   le motif graphique plan est d'abord réalisé à très grande échelle de manière à y faire apparaître les détails les plus fins dudit motif,

- puis la copie de ce motif est réalisée en positif avec réduction photographique à l'échelle 1 en conservant lesdits détails,
- le matériau photo-sensible sur lequel est superposée cette copie est un photo-polymère ayant la propriété de durcir sous l'action d'une irradiation par des rayons ultra-violets,
- les portions non irradiées de la plaque photo-sensible correspondant aux zones blanches du motif sont éliminées par simple lavage à l'eau chaude,
- et la plaque décorative moulée dans la matrice en silicone est réalisée en plâtre, les détails les plus fins apparaissant en creux et en relief.

Office européen
des brevets

**RAPPORT DE RECHERCHE EUROPEENNE**

Numero de la demande

EP 90 44 0101

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 660 279 (DUNLOP RUBBER CO.) <br> * Page 1, lignes 49-64; page 3, lignes 83-96; figures 1-6 * <br> --- | 1-3 | B 29 C 33/38 |
| X | US-A-3 739 051 (GEORGE WARREN SMITH) <br> * En entier * <br> --- | 1-3 | |
| A | FR-A-1 304 951 (ROLL-DIE AND MOLD DECORATORS INC.) <br> * Pages 1-2; figures 1-16 * <br> --- | 1-3 | |
| A | FR-A-2 193 359 (ETABLISSEMENTS L. FONTAINE) <br> * En entier * <br> ----- | 1-3 | |

**DOMAINES TECHNIQUES RECHERCHES (Int. Cl.5)**

B 29 C

Le présent rapport a été établi pour toutes les revendications

| Lieu de la recherche | Date d'achèvement de la recherche | Examinateur |
|---|---|---|
| LA HAYE | 12-04-1991 | SOZZI R. |